# EUROPEAN PATENT APPLICATION

(11) **EP 1 477 440 A1**
(43) Date of publication of application: **17.11.2004**
(21) Application number: 02748878.2
(22) Date of filing: 09.07.2002
(51) Int. Cl.: B65G 57/04

(54) **UNIVERSAL STACKER**

(30) Priority: 23.11.2001 ES 200102607
(71) Applicant: ASM-DIMATEC INGENIERA, S.A., 43206 Reus (ES)
(72) Inventor: MOYA GARCIA, Jose Julio, E-43206 Reus (ES)
(74) Representative: Urizar Anasagasti, José Antonio
(86) International application number: PCT/ES2002/000344
(87) International publication number: WO 2003/043917

(57) **Abstract**

The invention relates to a conveying and stacking machine which can be used for any type of product regardless of shape, size, weight or material. According to the invention, a feeder is used to transport the part or parts from a production or cutting point, which is disposed at the start of the installation, to the conveyor belts which transport the part(s) to the stacking area therefor. Moreover, a vent hole system, which is mounted in a moveable frame and which is positioned above the belts and the parts, removes said parts from the conveyor belt and deposits same in the storage location thereof.

## Description

### OBJECT OF THE INVENTION

The object of the present invention relates to a conveying and stacking machine, that transports and piles, with a special design, any type of product, regardless of its shape, size, weight and material.

### BACKGROUND OF THE INVENTION

The present invention breaks all existing concepts in relation to systems of transporting and stacking. The existing systems in today industry have been specifically designed to transport and pile the product within itself. This makes the system object of this invention to be the first thought-out and designed to transport and pile any kind of product, including all the possible variations that could likely arise in transporting and piling.

This new system works for all types of materials, shapes, sizes and weights fulfilling the three conditions of any system of transporting and stacking:
1. Pick-up the product.
2. Transport the product to the piling location.
3. Remove the product from the belt piling it in the area reserved for this purpose.

There are several examples of systems of conveying and stacking machines that are already patented using the exact philosophy mentioned previously above, that are designed specifically for the product that they must transport and stack.

### TITLE: INDUCTION RETAINER

NPUE:0231534
   TITLE: DEVICE FOR TRANSPORTING CANS FROM A PLATFORM TO A CONVEYER BELT
NSOL: P9601929
   TITLE: FRAMEWORK OF AUTOMATIC MULTIPLE MAGNETIC HEADS OR SEPRATING MAGNETIC SHEETS
NSOL: DE 196 36 086 A1
   TITLE: MAGNETIC BELT FOR TRANSPORT IN SUSPENSION OF SHEETING WITH SEVERAL SUSTAINING ELEMENTS PER MAGNET
NSOL: P8802083
   TITLE: FORMAT FEEDER FOR SHEET TRANSFORMATION LINES

As we could see from the patents mentioned above, what makes this invention different with respect to the existing ones, is that this machine combines all the existing systems in order to pick up, transport and pile the product, regardless of the shape, size, weight and material.

### DESCRIPTION OF THE INVENTION

The present invention has been called Universal stacker because it adjusts for all fits regardless of the shape, size, weight and material.

The product, that comes from the start of production or cutting, is moved automatically by a feeder, over the roller path formed by some rolling shoes, which length and quantity will be directly related to the maximum length of the piece or pieces to transport. A set of movement ball bearings have been mounted to these rolling shoes, preventing the excess of friction between the rolling shoes and the conveyor belts.

The rolling shoes are mounted under and in the middle of the feed belt, fixed to a set of pneumatic pistons, which lift up the rolling shoes to pick up the parts as they exit the feeding line; once the part is on top of the rolling shoes, they go down, depositing the piece over the conveyor belts, which are responsible of transporting the part or parts from its initial location to the piling area.

The conveyor belts of a width of about 60mm each, are mounted in the transporter, constructed with tubes and welded iron profiles. The belts are always assembled in pairs and unlimited quantity, being possible the regulation of the separation among them. So thus each conveyor belt is assembled with the opposed one or symmetrical one, allowing the adaptation of the system to the size of part or parts to transport. Besides a telescopic system has been held at the start of the transporter, from where the part or parts enter in order to adapt the precise distance from the production point

Once the part or parts to transport have been placed on top of the conveyor belts, these, that are constantly moving, move the part to the stacking areas; it has been thought to supply each installation with two belts. In the centre of each stacking area and in the middle of the two central belts, have been installed lineally two photoelectric cells at a different distance, that will be in charge of signalling the presence of a part to a series of snugs and rolling shoes disposed in the middle of the belts.

The snugs are arranged in linear fashion and assembled at the centre of the belts perpendicular to the installation. They are lifted up by pneumatic pistons at the signal of the photocells. Their functions are to stop the parts at the exact point and centre them in order to unload later.

At the precise moment in which the piece is stopped by the snugs and not to rub the conveyor belts, always moving, pneumatic rolling shoes situated in the centre of the belts and similar to the ones assembled at the beginning of the installation and at the unloading point, raise. Taking into account the different sizes of the part or parts and to increase the guarantee of the hold at the moment in which the rolling shoes lift up the piece or pieces from the conveyor belt, some different length rolling shoes have been assembled in the same direction that take the parts transported. The shortest rolling shoes measure initially about 100mm and increase progressively their length as we approach the unloading point, reaching a maximum of 400mm of the length of the shoe.

Once the pieces are suspended by the rolling shoes and over the belts, these are unloaded by a device with the shape of a spider which arms finish in suction pads; this vent hole system, adapted to the physical shape of each piece to unload, is fixed to a framework that trespasses the installation and is held up just above the point where the piece or pieces have been stopped. The vent hole system descends to the pieces grasping them with the suction pads and lifting them up from the rolling shoes, transporting them through the framework, towards one of the stacking points situated in each one of the sides of the installation, depositing the parts alternatively once in each side of the framework.

To release the pieces alternatively and make a minimum amount of movements in the transport and unload of the part or parts through the framework, have been mounted in the same moveable frame of the parts, two vent holes assembled in a way that when one of them is situated right over the conveyor belts to pick up the part or parts, the other is situated on top of the stacking area, picking up and depositing the parts at the same time. This efficient way reduces the time in half.

To increase the capacity of transporting and unloading of each installation even more, two points of unloading have been included, supplying each one of them with all the elements, photoelectric cell, snugs, lift up rolling shoes for the parts and framework with its corresponding vent hole systems and a minimum of four storage areas, in each side of the installation.

All the installation has been mechanized by electronic and computerized systems, commanding all the mechanical parts that are necessary to move, like the photocells belonging to each one of the stacking points, the snugs to stop the parts, or the shifting and regulation of the conveyor belts, by servomotor, pneumatic valves etc. decreasing the times of preparation of the installation for each one of the parts.

### DETAILED DESCRIPTION OF THE DRAWINGS

In order to provide and improved the understanding of the object of the present invention, a preferred practical embodiment of the present invention is described below, based on the attached figures.

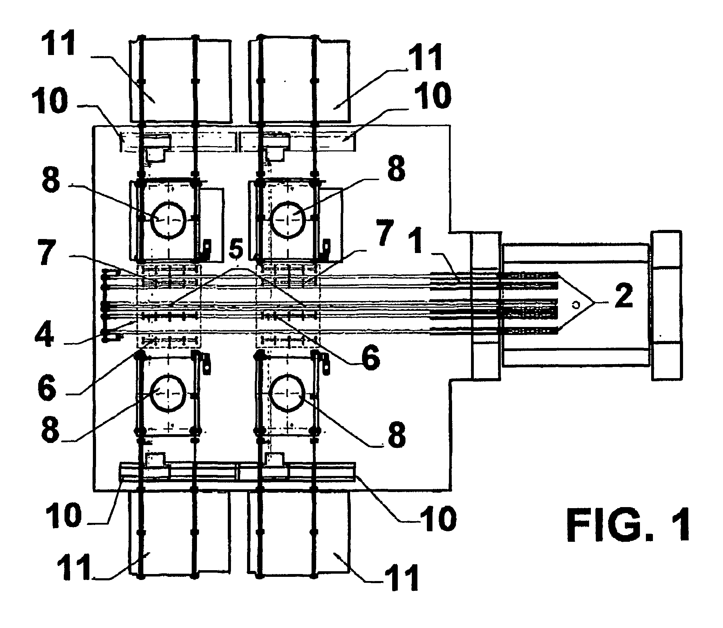

Figure 1: Upright projection view of the installation

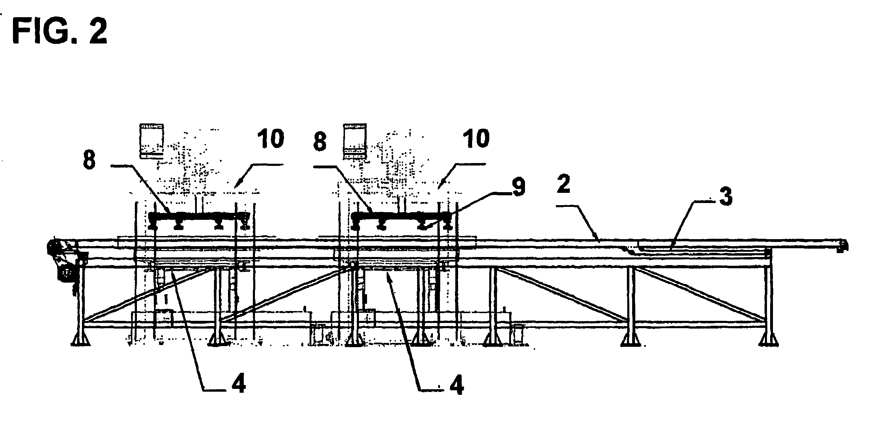

Figure 2: Schema of the installation

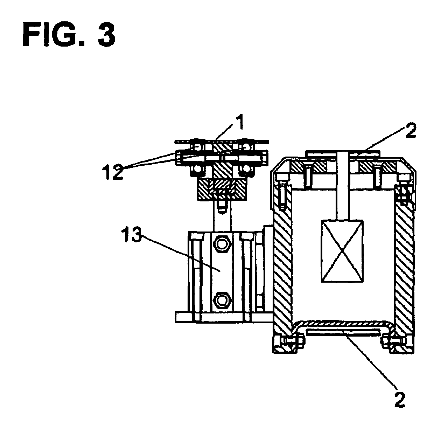

Figure 3: Front view section of the entry rolling shoes

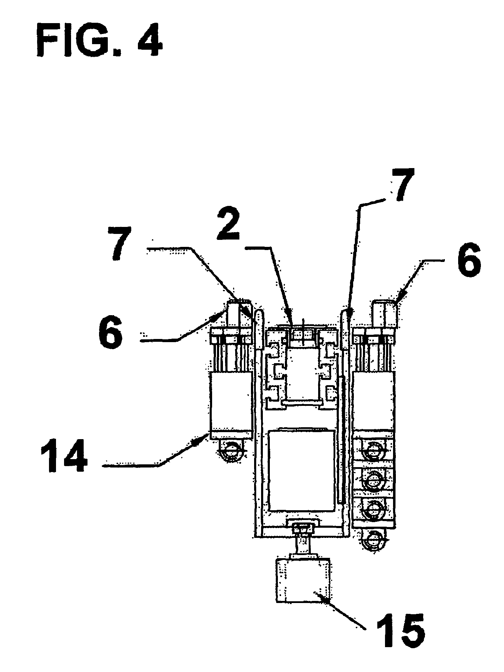

Figure 4: Front view section of the snugs and unloading rolling shoes.

### PREFERRED EMBODIMENT OF THE INVENTION

In order to provide an improved understanding of the object of the invention, a preferred embodiment of the invention is described below.
The conveying and stacking machine which can be used for any type of product regardless shape, size, weight and material consists of the following main groups in each of its modules:
1) - Unit formed by the rolling shoes and telescopic entry system of the product.
2) - Unit formed by conveyor belts and their mechanisms.
3) - Unit of hold-up and lift up of the parts over the belts.
4) - Unit formed by the frameworks and vent hole systems, to unload the parts and later transport them to their storage area.

### DESCRIPTION OF THE MODULES:

### 1) Unit formed by the rolling shoes and telescopic entry system of the product.

Assembled at the entry of the production point or cutting of the material to transport are the rolling shoes (1), mounted underneath and in the middle of the conveyor belts (2) and held by a set of pneumatic pistons (13), which raise the rolling shoes (1) over the conveyor belts to pick up the parts at the exit of the feeding point. Once that these are over them, the rolling shoes (1) come down, positioning the part on top of the conveyor belt (2). To avoid possible friction between the parts and the rolling shoes during the transportation over the rolling shoes (1) a set of movement ball bearings (12), (fig-3) has been assembled. All this unit is assembled over a frame, that by means of a telescopic hydraulic system (3), moves forward or backwards, positioning itself at the exact point to pick up the parts at the start of the installation.

### 2) -Unit formed by conveyor belts and their mechanisms.

The structure of the transporter is built with tubes and welded iron profiles. They are always mounted in an even number and with unlimited quantity of conveyor belts (2), of a width of 60mm each, being able to regulate the separation between them, because each conveyor belt (2) is mechanically joint to its opposed or symmetrical, forming this way set of belt pairs, and thus allowing the system to adapt the size of the part or part to transport.
At the start of the transporter, where the part or parts come in, it is disposed an electrical telescopic system (3) that facilitates the necessary adjustments of the installation to pick up the part or parts at the production point.

### 3) -Unit of hold-up and lift up of the parts over the belts.

Once the part or parts to transport have been settled on top to the conveyor belts (2), these, that are constantly moving, shift the part or parts to the stacking points (4). It has been thought to mount two for each installation; centred in each one of the stacking points (4) and in the middle of the two central belts. Some photoelectric cells (5) have been installed to detect the parts that are travelling on the belt. They are situated lengthwise and at different distances. At the moment in which the photoelectric cells (5), verify the presence of the parts in the unloading points (4), they emit an electric signal to make the pneumatic electro-valves raise pushed up by of the pneumatic pistons (14) to the snugs (6), fig-4 responsible for positioning and hold up the part at the unload point (4) and with them, they are lifted up by the snugs (15) the rolling shoes (7), in charge of shifting the part or parts from the conveyor belts (2), assembled both in the middle of the belts (2) and centred in the stacking points (4).
Different shoe lengths (7) have been assembled to deal with the different sizes of the parts, being the ones assembled at the longest distance of the stacking point of about 100mm and increasing progressively its length as we get closer to the unload point, being the maximum length of the assembled rolling shoes of about 400mm lenght per shoe.

### 4) -Unit formed by the frameworks and vent hole system, to unload the parts and later transport them to their stacking area.

To improve the efficiency and capacity of transport of the installation two points of unloading have been foreseen (4), so thus each one of them will be provided with all the elements, photoelectric cells (5), snugs (6), rolling shoes (7) for the lifting of the parts and also a framework (10), installing in each framework (10) two devices with the shape of a spider, vent hole system (8) and mounted in such a way that when one is settled in the middle of the installation prepared to pick up the part already transported, the other one is right over the piling point (11) or unloading.
The two devices (8) make the same movements, going up and down picking up and unloading the parts at the same time, getting this way to reduce the time in half.
Each time travel the vent hole system travels (8) through the framework (10), loads the parts with the device that is situated in the middle of the installation and at the same time unloads the parts of the one (8) that is situated in the stacking point (11).

## Claims

1. Conveying and stacking machine which can be used for any type of product regardless of shape, size, weight or material and it is composed by:
- A unit formed by the rolling shoes and telescopic entry system of the product mounted at the start of the installation of the production point or cutting of the material to be transported in which are mounted the rolling shoes (1), assembled underneath and in the middle of the conveyor belts (2) and fixed by a set of pneumatic pistons (13), which lift up the rolling shoes (1) over the conveyor belts to pick up the parts at the exit of the feeding line; once these are on top of them, the rolling shoes (1) descend, positioning the piece on top of the conveyor belt (2). To avoid possible friction between the parts and the rolling shoes (1) and later between these last ones and the conveyor belts (2) have been mounted in the rolling shoes (1) a set of movement balls bearings (12).
All this unit is mounted on a frame, that by means of an electrical telescopic system (3) which moves forward and backwards, positions itself at the exact point to pick up the parts at the start of the installation.
- A unit formed by the conveyors belts (2) and their mechanisms mounted over a transporter constructed with tubes and welded iron profiles. It is mounted always in an even number and with unlimited quantity. The conveyor belts (2), have a width of about 60mm each one, being possible to regulate the separation between them. They are always set in couples, so each conveyor belt is assembled with the opposite or symmetrical one to itself, allowing the system to be adapted to the size of piece or pieces to transport.
- A unit of mechanisms created for holding-up, centring and lifting of the parts to transport once that these have been deposited on top of the conveyor belt (2), which are constantly moving, transporting the part or parts to the stacking area (4).
Some photoelectric cells have been installed in the middle of the two central belts, centred in each one of the stacking areas (4), to detect the parts that are moving in the belt. These cells are positioned in a linear lengthwise fashion and at a different distance. Every time the photoelectric cells (5) verify the presence of parts at the stacking areas (4), they emit an electric signal in order to make the electro-valves lift up the snugs (6), for this purpose some pneumatic pistons (14) are used, lifting the snugs, which are in charge of positioning and hold-up the part or parts at the storage area (4). At the same time and the pistons (15) raise the rolling shoes (7), which are in charge of shifting the part or parts of the conveyor belts (2), mounted both in the middle of the belts (2) and centred at the stacking areas (4).
Foreseeing the different sizes of the parts to stack, the rolling shoes assembled have different lengths (7), being the most distant ones from the stacking area of about 100mm and increasing progressively to a maximum of 400mm per shoe, as we get closer to the stacking area.
- A unit formed by the frameworks and vent hole systems, to unload the parts and the later transportation of the same parts to the stacking areas. They are supplied with all the elements, photoelectric cells (5), snug (6), lift up rolling shoes (7) and a framework (10) with two vent hole systems (8) for each framework (10), mounted in a way that when one device is in the middle of the installation prepared to pick up the transported parts, the other one is right above the stacking or storage area(11).
Both picking up the parts and unloading them are being held by the vent hole system (8) at the stacking areas (11), the two systems make the same movements, going up and down to pick up and deposit the parts simultaneously. The device that is at the centre of the installation loads the parts and at the same time the other device deposits the parts in the storage area (11) which reduces the work time to a half.
Despite of all the pieces and mechanisms mounted in this installation are individually known already in the industry nowadays, our invention has been carefully thought out and designed in order to give maximum performance and to be the first machine designed to transport and pile any type of product regardless the shape, size, weight and material. This machine is unique and universal when we refer to transporting and stacking all and any type of product.
